# EUROPEAN PATENT APPLICATION

(11) **EP 4 223 590 A1**
(43) Date of publication of application: **09.08.2023**
(21) Application number: 21916773.1
(22) Date of filing: 07.01.2021
(51) Int. Cl.: B60Q 9/00, B60R 21/00

(54) **VEHICLE ALARM CONTROL METHOD AND SYSTEM, AND VEHICLE**

(71) Applicant: Zhejiang Geely Holding Group Co., Ltd., Hangzhou City, Zhejiang 310051 (CN); Geely Automobile Research Institute (Ningbo) Co., Ltd, Ningbo, Zhejiang 315336 (CN)
(72) Inventor: HU, Shuaishuai, Hangzhou City, Zhejiang 310051 (CN); LYU, Xiaojiang, Hangzhou City, Zhejiang 310051 (CN); OU, Jianping, Hangzhou City, Zhejiang 310051 (CN); WANG, Peng, Hangzhou City, Zhejiang 310051 (CN); ZHANG, Haiyang, Hangzhou City, Zhejiang 310051 (CN); ZHU, He, Hangzhou City, Zhejiang 310051 (CN); WANG, Pengxiang, Hangzhou City, Zhejiang 310051 (CN); ZHOU, Dayong, Hangzhou City, Zhejiang 310051 (CN); GU, Perry Pengyun, Hangzhou City, Zhejiang 310051 (CN)
(74) Representative: Neusser, Sebastian
(86) International application number: PCT/CN2021/070664
(87) International publication number: WO 2022/147715

(57) **Abstract**

Provided are a vehicle alarm control method, a vehicle alarm control system, and a vehicle, which relate to the field of vehicle technologies. The vehicle alarm control method includes: determining whether a target object is present in rear seats of a vehicle; upon determining that the target object is present in the rear seats of the vehicle, controlling to issue a first-level alarm, in response to stalling of the vehicle; after the vehicle stalls, determining whether a driver of the vehicle has left a driver seat; upon determining that the driver of the vehicle has left the driver seat, determining whether a rear door of the vehicle has ever been opened after the vehicle stalls and before doors of the vehicle are locked; and upon determining that no rear door of the vehicle has ever been opened, controlling to issue a second-level alarm. Making a predetermination about whether a target object is present in a back row of the vehicle can avoid bothers to a user caused by issuance of an alarm whenever the vehicle stalls. The two levels of alarms in the present disclosure have a clear boundary there between and reduce a probability of false alarms; and the two levels of alarms can be achieved using devices already in the vehicle, without the need of adding any hardware device, thereby reducing hardware costs.

## Description

### FIELD

The present disclosure relates to the field of vehicle control technologies, and more particularly, to a vehicle alarm control method and system and a vehicle.

### BACKGROUND

Users have increasingly higher requirements for vehicle safety performance due to the popularity of vehicle use. However, currently, it is frequently encountered that articles left in the vehicle are stolen or dangers occur to children or infants when the children or infants are left in the vehicle. To solve these problems, some vehicles are designed with reminder technologies for forgotten objects in the back row currently. However, most of the current reminder technologies for forgotten objects in the back row lack a predetermination about whether a target object is present in rear seats, and thus a false alarm may be issued since the vehicle issues a reminder in any situation, which causes inconvenience to a user of the vehicle. In some other technologies, boundaries between multi-level alarms are ambiguous when the vehicle issues the alarms, which leads to an ambiguous alarming logic and a high probability of false alarms.

### SUMMARY

In view of the above problems, the present disclosure provides a vehicle alarm control method, a vehicle alarm control system, and a vehicle, capable of overcoming the above problems or at least partially solving the above problems.

One object of the present disclosure is to provide a vehicle alarm control method, a vehicle alarm control system, and a vehicle, aiming to avoid false alarms through making a predetermination before an alarm is issued against a target object in the vehicle.

A further object of the present disclosure is to reduce hardware improvements of the vehicle so as to reduce costs.

Particularly, in one aspect of embodiments of the present disclosure, a vehicle alarm control method is provided. The vehicle alarm control method includes: determining whether a target object is present in rear seats of a vehicle; upon determining that the target object is present in the rear seats of the vehicle, controlling to issue a first-level alarm, in response to stalling of the vehicle; after the vehicle stalls, determining whether a driver of the vehicle has left a driver seat; upon determining that the driver of the vehicle has left the driver seat, determining whether a rear door of the vehicle has ever been opened after the vehicle stalls and before doors of the vehicle are locked; and upon determining that no rear door of the vehicle has ever been opened after the vehicle stalls and before the doors of the vehicle are locked, controlling to issue a second-level alarm.

Optionally, the operation of determining whether the target object is present in the rear seats of the vehicle includes: determining whether the rear door of the vehicle has ever been opened within a predetermined time period before ignition of the vehicle, or after the ignition of the vehicle and before a start of running of the vehicle; and upon determining that the rear door of the vehicle has ever been opened within the predetermined time period before the ignition of the vehicle, or after the ignition of the vehicle and before the start of running of the vehicle, determining that the target object is present in the rear seats of the vehicle.

Optionally, the operation of determining whether the target object is present in the rear seats of the vehicle includes determining whether the target object is present in the rear seats of the vehicle through scanning by a sensor in response to ignition startup of the vehicle.

Optionally, the sensor includes an infrared sensor and/or a camera.

Optionally, the first-level alarm occurs inside the vehicle and includes visual reminder information and/or sound reminder information.

Optionally, the visual reminder information includes prompt information displayed on an instrument, central control screen, or head-up display of the vehicle; and the sound reminder information includes a buzzer alarm sound or a voice prompt.

Optionally, the operation of determining whether the driver of the vehicle has left the driver seat includes: determining whether a door at a side of the driver seat of the vehicle is opened; upon determining that the door at the side of the driver seat of the vehicle is opened, determining whether the doors of the vehicle are locked after the door at the side of the driver seat is opened and closed; and upon determining that the doors of the vehicle are locked, determining that the driver of the vehicle has left the driver seat.

Optionally, the operation of determining whether the driver of the vehicle has left the driver seat includes: detecting a gravity change at the driver seat through a gravity sensor disposed inside the driver seat of the vehicle, and determining whether the driver of the vehicle has left the driver seat based on the gravity change.

Optionally, the second-level alarm occurs outside the vehicle and includes a sound reminder and/or a light reminder.

Optionally, the target object includes an article and/or a living subject.

Optionally, the method further includes, prior to controlling to issue the first-level alarm: obtaining an activated or inactivated state of a first-level alarm function of the vehicle, the activated or inactivated state of the first-level alarm function being set as default or set in accordance with an externally inputted user operation; and performing an operation of said controlling to issue the first-level alarm, in response to the first-level alarm function being in the activated state.

Optionally, the method further includes, prior to controlling to issue the second-level alarm: obtaining an activated or inactivated state of a second-level alarm function of the vehicle, the activated or inactivated state of the second-level alarm function being set as default or set in accordance with an externally inputted user operation; and performing an operation of said controlling to issue the second-level alarm, in response to the second-level alarm function being in the activated state.

Particularly, the present disclosure further provides a vehicle alarm control system. The vehicle alarm control system includes: a memory having a control program stored therein; and a processor. The control program is configured to, when executed by the processor, implement the vehicle alarm control method as described above.

Particularly, the present disclosure further provides a vehicle. The vehicle includes the vehicle alarm control system as described above.

The vehicle alarm control method and system of the present disclosure first monitor whether a target object is present in the rear seats of the vehicle before issuing an alarm, and the alarm will be issued only when a target object is present in the rear seats of the vehicle. This process is to predetermine in advance whether a target object is present in a back row of the vehicle, which avoids bothers to a user caused by issuance of the alarm whenever the vehicle stalls. In addition, all detections and determinations in the method of the present disclosure can be completed by using sensors already in the vehicle, and have no need of adding additional transducers or sensors in the vehicle, without adding a vehicle hardware device or modifying the vehicle hardware, thereby reducing hardware costs.

Further, the vehicle alarm control method and system of the present disclosure adopt two levels of alarms. The first-level alarm is issued in response to the stalling of the vehicle, which can greatly reduce but cannot completely avoid occurrences of forgotten objects in a back row. The second-level alarm is a further supplement to the first-level alarm when the first-level alarm is ineffective, so as to substantially eliminate the occurrences of forgotten objects. In addition, there is a clear boundary between the first-level alarm and the second-level alarm. The first-level alarm is issued in response to the stalling of the vehicle. The second-level alarm is issued in a condition where the vehicle stalls, the driver gets off the vehicle, and the rear door of the vehicle is not opened. Since there is a clear boundary between the first-level alarm and the second-level alarm in the solutions of the present disclosure, and the first-level alarm function and the second-level alarm function can be activated or inactivated for different scenarios and different user operations, a probability of the false alarm and a probability of the bothers to the user can be minimized to improve use experience of the user.

The above description is merely an overview of the technical solutions of the present disclosure. To facilitate a clear understanding of technical means of the present disclosure and the implementations of the technical solutions in accordance with the contents of the specification, and to clarify and explain the above and other objects, features, and advantages of the present disclosure, specific embodiments of the present disclosure will be described below.

The above and other objects, advantages, and features of the present disclosure will become more apparent to those skilled in the art from the following detailed description of specific embodiments of the present disclosure made with reference to the accompanying drawings.

### BRIEF DESCRIPTION OF THE DRAWINGS

Some specific embodiments of the present disclosure will be described below in detail with reference to the accompanying drawings in an exemplary rather than restrictive manner. In the accompanying drawings, same or similar components or parts are denoted by same reference numerals. It should be understood by those skilled in the art that these accompanying drawings are not necessarily drawn to scale. In the accompanying drawings:
FIG. 1 is a schematic flowchart of a vehicle alarm control method according to an embodiment of the present disclosure;
FIG. 2 is a schematic flowchart of steps of determining whether a target object is present in rear seats of a vehicle according to an embodiment of the present disclosure; and
FIG. 3 is a schematic flowchart of steps of determining whether a driver of a vehicle has left a driver seat according to another embodiment of the present disclosure.

### DETAILED DESCRIPTION

Exemplary embodiments of the present disclosure will be described in detail below with reference to the accompanying drawings. Although the exemplary embodiments of the present disclosure are illustrated in the accompanying drawings, it should be understood that the present disclosure may be embodied in various forms and should not be construed as being limited to the embodiments set forth herein. Instead, these embodiments are provided for a thorough understanding of the present disclosure and for fully conveying the scope of the disclosure to those skilled in the art.

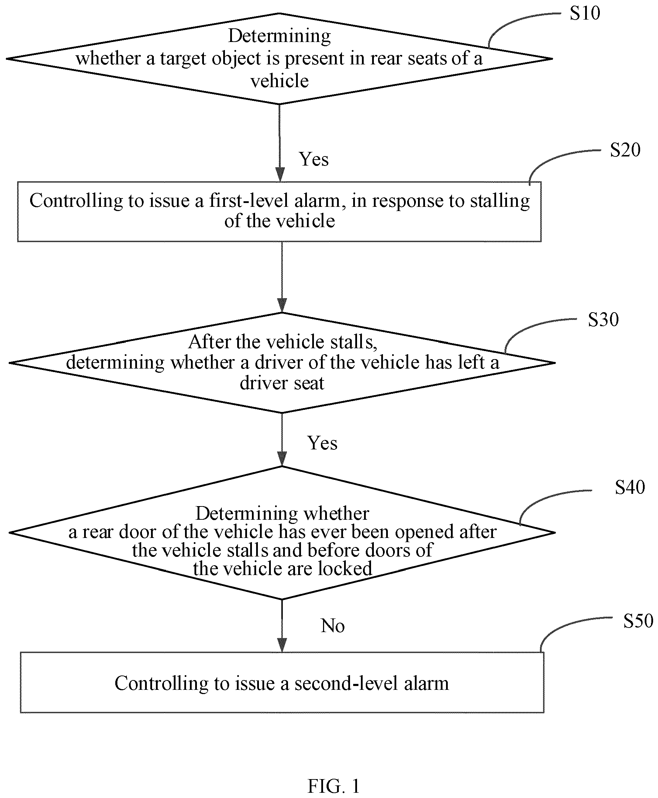

FIG. 1 is a schematic flowchart of a vehicle alarm control method according to an embodiment of the present disclosure. As illustrated in FIG. 1, the embodiment discloses a vehicle alarm control method. The vehicle alarm control method specifically includes actions at the following blocks.

At block S10, whether a target object is present in rear seats of a vehicle is determined. If yes, i.e., upon determining that the target object is present in the rear seats of the vehicle, the action at block S20 is performed.

At block S20, a first-level alarm is controlled to be issued, in response to stalling of the vehicle.

At block S30, after the vehicle stalls, whether a driver of the vehicle has left a driver seat is determined. If yes, the action at block S40 is performed.

At block S40, whether a rear door of the vehicle has ever been opened after the vehicle stalls and before doors of the vehicle are locked is determined. If no, the action at block S50 is performed.

At block S50, a second-level alarm is controlled to be issued.

In this embodiment, if it is determined in block S40 that the rear door of the vehicle has ever been opened after the vehicle stalls and before the doors of the vehicle are locked, it may be considered that no target object is left in the rear seats, and this process ends.

In this embodiment, the target object includes an article and/or a living subject. Generally, a specific living subject refers to a person with no action capacity, especially an infant or a child.

The determination at the block S10 in the embodiment may be started in response to unlocking of a vehicle door lock, or may be started in response to ignition of the vehicle or after the ignition of the vehicle.

Before the first-level alarm is issued at block S20, the vehicle may be in a running state or may be started without running. The first-level alarm will be issued as long as a target object is present in the rear seats of the vehicle and the vehicle stalls later.

In practice, during use of the vehicle, after unlocking or ignition of the vehicle, the user may put down a target object in the rear seats, then other things come to his/her mind, and thus the user stalls the vehicle and go away. To avoid the occurrence of this situation, the driver should be alerted as long as a target object is present in the rear seats of the vehicle and the vehicle stalls after ignition of the vehicle, regardless of whether the vehicle is started and runs.

It is apparent in this embodiment that whether a target object is present in the rear seats of the vehicle is monitored before an alarm is issued. The alarm will be issued only when the target object is present. This process is to determine in advance whether a target object is present in the back row of the vehicle, which avoids bothers to the user caused in a situation where an alarm is issued whenever the vehicle stalls.

In addition, the alarm method in this embodiment adopts two levels of alarms. The first-level alarm is issued in response to the stalling of the vehicle, which can greatly reduce but cannot completely avoid occurrences of forgotten objects in the back row of the vehicle. The second-level alarm is a further supplement to the first-level alarm when the first-level alarm is ineffective, so as to substantially eliminate the occurrence of forgotten objects. In addition, a clear boundary is present between the first-level alarm and the second-level alarm. The first-level alarm is issued in response to the stalling of the vehicle. The second-level alarm is issued in a condition where the vehicle stalls, the driver gets off the vehicle, and the rear door of the vehicle is not opened. The first-level alarm and the second-level alarm having the clear boundary there between can minimize a probability of false alarms and a probability of bothers to the user.

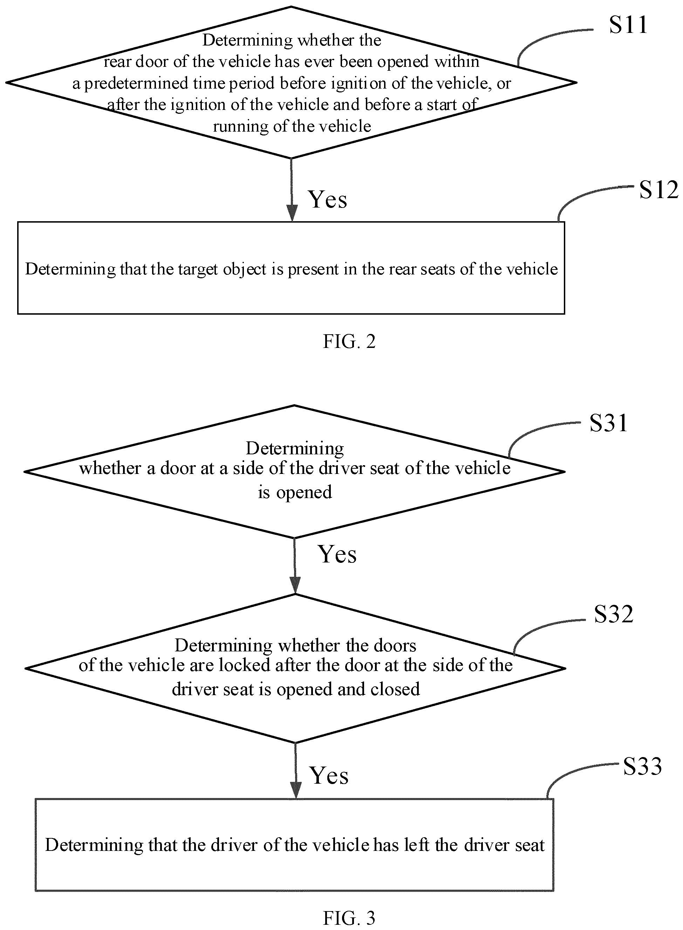

In an embodiment of the present disclosure, with reference to FIG. 2, the operation of determining whether the target object is present in the rear seats of the vehicle includes actions at the following blocks.

At block S11, whether the rear door of the vehicle has ever been opened within a predetermined time period before ignition of the vehicle, or after the ignition of the vehicle and before a start of running of the vehicle is determined. If yes, i.e., upon determining that the rear door of the vehicle has ever been opened within the predetermined time period before the ignition of the vehicle, or after the ignition of the vehicle and before the start of running of the vehicle, the action at block S12 is performed.

At block S12, it is determined that the target object is present in the rear seats of the vehicle.

In this embodiment, generally, the vehicle door lock is unlocked before the ignition of the vehicle. The rear door of the vehicle will be opened when something needs to be placed in the back row or when a person needs to sit in the back row. Therefore, whether a target object is present in the rear seats of the vehicle may be determined through detecting whether doors of the rear seats of the vehicle are opened before the ignition. In this embodiment, the predetermined time period may be set as desired. For example, the predetermined time period of this embodiment may be set as 1 minute to 5 minutes. If the rear door of the vehicle is opened within 1 minute to 5 minutes before the ignition of the vehicle, it is determined that a target object is present in the rear seats of the vehicle.

In addition, there may be a situation where the driver switches on the ignition of the vehicle and then a passenger seats in the back row. In this situation, it can also be determined that a target object is present in the rear seats of the vehicle if the rear door of the vehicle is opened after the ignition of the vehicle and before the start of running of the vehicle. By fully considering the above two situations, whether a target object is present in the back row of the vehicle can be comprehensively and accurately determined to improve an accuracy of the predetermination.

In this embodiment, a timer in a vehicle body or in a controller may be used for timing when detecting whether the target object is present in the rear seats of the vehicle. The timer may be started when the rear door is opened. In this case, a time point when the timer is started is a time point when the rear door is opened. The timer may alternatively be started after the rear door is opened and closed. In this case, the time point when the timer is started is a time point when the rear door is closed. If a counted time period of the timer by the time of ignition of an engine of the vehicle is shorter than or equal to the predetermined time period, it may be determined that the rear door of the vehicle has ever been opened within the predetermined time period before the ignition of the vehicle. The rear door mentioned herein may be either a left rear door or a right rear door. Before the ignition of the engine, if the rear door of the vehicle is opened and closed many times, it may be set that the timer is reset every time the rear door of the vehicle is opened. A final determination is made based on the last time the rear door of the vehicle is opened and the timer is started. Of course, in other embodiments, it may be set that the timer is not reset and a time point when the rear door of the vehicle is opened for the first time is determined as a counting start time point, in case of multiple openings. The timer will be automatically turned off when the counted time period of the timer exceeds the predetermined time period. In addition, when the vehicle is successful locked externally, the timer will be automatically turned off.

In this embodiment, whether the target object is present in the rear seats of the vehicle is determined based on whether the door of the vehicle is unlocked, while whether the door of the vehicle is unlocked is determined through detection by a transducer inherent in the vehicle. Data detected by the transducer is stored in real time in a whole vehicle controller. In this embodiment, whether the vehicle stalls or not may also be determined by a transducer already in the vehicle. For example, a display screen or voice system already in the vehicle may be directed used for sounds or light required by an alarm device to issue the alarm. Therefore, the method of this embodiment on the whole has no need of adding an additional transducer or sensor in the vehicle, and can be completed by using original hardware of the vehicle without adding a vehicle hardware device or modifying the vehicle, thereby reducing hardware costs.

In another embodiment of the present disclosure, the operation of determining whether the target object is present in the rear seats of the vehicle includes determining whether the target object is present in the rear seats of the vehicle through scanning by a sensor in response to ignition startup of the vehicle.

In particular, the sensor in this embodiment includes an infrared sensor and/or a camera.

In this embodiment, the rear seats are directly scanned in response to the ignition startup of the vehicle to determine whether a target object is present in the rear seats of the vehicle. In comparison with determining whether the target object is present in the rear seats of the vehicle through determining whether the door of the vehicle is opened, a direct scanning via the sensor is more intuitive.

In an embodiment of the present disclosure, the first-level alarm occurs inside the vehicle and includes visual reminder information and/or sound reminder information. The visual reminder information includes prompt information displayed on an instrument, central control screen, or head-up display of the vehicle. The sound reminder information includes a buzzer alarm sound or a voice prompt, etc. The first-level alarm, whether being the visual reminder information or the sound reminder information, is set inside the vehicle, and can be issued using a component already in the vehicle.

The first-level alarm occurs when the vehicle is parked. That is, the first-level alarm is issued once the vehicle is parked and stalls, so that the driver can be well prompted to avoid an omission. In some embodiments, in a reminder of forgotten objects in the back row, a sound reminder of the first-level alarm may be issued by the instrument, and the sound reminder may be one or more sounds, and may last for 1 second, 0.7 second, or other time lengths. The visual reminder of the first-level alarm may be displayed on the instrument or on the large central control screen or the head-up display. Contents of the visual reminder may include, but are not limited to, "Check Rear Seat", "please check back row", etc. The text may be set with specific display effects, including a text color (such as white, yellow, red, etc.), a text size (such as a text height of 2.59 mm, 4.31 mm, 3.45 mm, 1.6 mm, etc.), a text flicker time period (such as 3.5 s or other time lengths), a text flicker frequency (such as 0.5 Hz, 1 Hz, and 15 Hz), etc.

In an embodiment of the present disclosure, with reference to FIG. 3, the operation of determining whether the driver of the vehicle has left the driver seat includes actions at the following blocks.

At block S31, whether a door at a side of the driver seat of the vehicle is opened is determined. If yes, the action at block S32 is performed.

At block S32, whether the doors of the vehicle are locked after the door at the side of the driver seat is opened and closed is determined. If yes, the action at block S33 is performed.

At block S33, it is determined that the driver of the vehicle has left the driver seat.

In this embodiment, if the door at the side of the driver seat of the vehicle is opened and locked, it indicates that the driver has an intention of getting off and leaving the vehicle.

In another embodiment of the present disclosure, the operation of determining whether the driver of the vehicle has left the driver seat includes: detecting a gravity change at the driver seat through a gravity sensor disposed inside the driver seat of the vehicle, and determining whether the driver of the vehicle has left the driver seat based on the gravity change.

In some embodiments, the gravity sensor detects a reduction in gravity of the driver seat after the vehicle stalls, and therefore determines that a person in the driver seat of the vehicle has got off and left the vehicle. Of course, this embodiment may be used as an alternative embodiment. Detection and determination may be performed in this manner when the driver seat of the vehicle is equipped with the gravity sensor. When the driver seat of the vehicle is not equipped with the gravity sensor, actions at block S31 to block S33 are used to determine whether the driver has left the driver seat.

Whether the driver has an intention of leaving is interpreted through determination of whether the driver has left the driving seat according to the above different embodiments. The driver leaving the driver seat indicates that a target object in the back row of the vehicle is in a risk of being forgotten, and thus, a determination of an issuance condition of the second-level alarm may be started. When the issuance condition is satisfied, the second-level alarm is issued. In some embodiments, the second-level alarm may have an alarming level higher than that of the first-level alarm and occurs outside the vehicle. The second-level alarm may include a sound reminder (such as a voice broadcast, a persistent alarm sound, etc.) and/or flickering light. In the reminder of forgotten objects in the back row, the sound reminder of the second-level alarm may be issued by an exterior trumpet of the vehicle or other loudspeakers, may last for 1.5 s, 2 s, 3 s, 4 s, 5 s, or other time lengths, and may be one sound, two sounds, three sounds, four sounds, five sounds, or six sounds, etc., in total. When issued, the second-level alarm may be accompanied with flickers of four exterior corner lights of the vehicle or other lights. A flicker frequency may be or may not be synchronized with the sound. A flicker time length and a number of times of flickers may be lower than, equal to, or greater than those of the sound. The voice broadcast of the second-level alarm may be louder than the voice prompt of the first-level alarm.

In addition, as an embodiment of the present disclosure, the vehicle alarm control method further includes, prior to controlling to issue the first-level alarm: obtaining an activated or inactivated state of a first-level alarm function of the vehicle, the activated or inactivated state of the first-level alarm function being set as default or set in accordance with an externally inputted user operation; and performing an operation of controlling to issue the first-level alarm, in response to the first-level alarm function being in the activated state.

Likewise, the vehicle alarm control method further includes, prior to controlling to issue the second-level alarm: obtaining an activated or inactivated state of a second-level alarm function of the vehicle, the activated or inactivated state of the second-level alarm function being set as default or set in accordance with an externally inputted user operation; and performing an operation of controlling to issue the second-level alarm, in response to the second-level alarm function being in the activated state.

In this embodiment, both the first-level alarm and the second-level alarm may be set as default or set in accordance with the externally inputted user operation. In general, it is set as default that both the first-level alarm function and the second-level alarm function are normally in an activated state. The detection and alarm functions of a whole system are activated each time the vehicle starts up. The setting in accordance with the externally inputted user operation may be implemented with a switch provided at the vehicle. Two switches may be provided, i.e., a switch for controlling to activate or inactivate the first-level alarm function and a switch for controlling to activate or inactivate the second-level alarm function. Generally, the switches are both in a state of inactivating the alarm function. When it is monitored that a target object is present in the rear seats of the vehicle, the switches will be automatically switched to a state of activating the alarm function. The driver may choose to turn off a template switch manually, so that only the first-level alarm function or only the second-level alarm function is retained, or both the first-level alarm function and the second-level alarm function are inactivated.

In some embodiments, the switch may be provided with a text identifier. The text identifier may be expressed in Chinese or English, such as "CPD", "Reminder of forgotten objects in back row", "First Warning", "Instrument reminder", "Second Warning", or "Horn prompt", etc. The switch may be disposed on the instrument. The switch may be controlled through an instrument touch screen when disposed on the instrument. The switch may be alternatively disposed on a steering wheel, and controlled through a button on the steering wheel. The switch may be alternatively disposed on the central control screen. When disposed on the central control screen, the switch may be directly controlled through the central control touch screen, or may be controlled via a button around the central control screen. A display interface of the switch may be in different colors. For example, grey represents ON, green represents OFF. Of course, the colors may be diversified. Grey may be replaced with white or other dark colors. Green may be replaced with blue, etc.

Based on the same technical concept, the embodiments of the present disclosure further provide a vehicle alarm control system. The vehicle alarm control system may include a memory having a control program stored therein and a processor. The control program is configured to, when executed by the processor, implement the vehicle alarm control method according to any one or a combination of the above embodiments. The processor may be a central processing unit (CPU), or a digital processing unit, etc. The processor receives and transmits data via a communication interface. The memory is configured to store a program executed by the processor. The memory is any medium that can be used to carry or store desired program codes in a form of instructions or data structures and accessible by a computer, or may be a combination of a plurality of memories. The above control program may be downloaded from a computer-readable storage medium to a corresponding computing/processing device or may be downloaded to a computer or an external storage device via a network (e.g., the Internet, a local area network, a wide area network, and/or a wireless network).

The vehicle alarm control system makes a predetermination in advance about whether a target object is present in the back row of the vehicle, which avoids bothers to the user caused by the issuance of the alarm whenever the vehicle stalls.

The vehicle alarm control system adopts two levels of alarms. The first-level alarm is issued in response to the stalling of the vehicle, which can greatly reduce but cannot completely avoid occurrences of forgotten objects in the back row. The second-level alarm is a further supplement to the first-level alarm when the first-level alarm is ineffective, which can substantially eliminate the occurrences of forgotten objects. In addition, there is a clear boundary between the first-level alarm and the second-level alarm. The first-level alarm is issued in response to the stalling of the vehicle. The second-level alarm is issued in the condition where the vehicle stalls, the driver gets off the vehicle, and the rear door of the vehicle is not opened. Since there is a clear boundary between the first-level alarm and the second-level alarm in the vehicle alarm control system, and the first-level alarm function and the second-level alarm function can be activated or inactivated for different scenarios and different user operations, the probability of the false alarm and the probability of bothers to the user can be minimized to improve the use experience of the user.

Based on the same technical concept, the embodiments of the present disclosure further provide a vehicle. The vehicle may include the vehicle alarm control system described above. In some embodiments, the vehicle further includes a collecting device and an alarm device. The collecting device is connected to the vehicle alarm control system and configured to transmit various collected information to the vehicle alarm control system. The alarm device is also connected to the vehicle alarm control system. The vehicle alarm control system is configured to control the alarm device to issue an alarm. The collecting device may include various transducers of the vehicle, such as an infrared sensor, a door opening sensor, a vehicle ignition/stalling sensor, a vehicle seat gravity sensor, etc. The alarm device may be any one or a combination of sound, light, and electricity, and may be disposed inside or outside the vehicle. The vehicle using the above vehicle alarm control system can effectively avoid a problem of forgetting an article or a passenger (especially a child) in the back row of the vehicle, which greatly increases safety performance of the vehicle, and avoids an occurrence of dangers.

Those skilled in the art should now realize that although the exemplary embodiments of the present disclosure have been illustrated and described in detail herein, many other variants or modifications consistent with the principle of the present disclosure can still be directly determined or derived based on the content of the present disclosure, without departing from the ideas and scope of the present disclosure. Therefore, all these other variants or modifications are to be encompassed by the scope of the present disclosure.

## Claims

1. A vehicle alarm control method, comprising:
determining whether a target object is present in rear seats of a vehicle;
upon determining that the target object is present in the rear seats of the vehicle, controlling to issue a first-level alarm, in response to stalling of the vehicle;
after the vehicle stalls, determining whether a driver of the vehicle has left a driver seat;
upon determining that the driver of the vehicle has left the driver seat, determining whether a rear door of the vehicle has ever been opened after the vehicle stalls and before doors of the vehicle are locked; and
upon determining that no rear door of the vehicle has ever been opened after the vehicle stalls and before the doors of the vehicle are locked, controlling to issue a second-level alarm.

2. The vehicle alarm control method according to claim 1, wherein said determining whether the target object is present in the rear seats of the vehicle comprises:
determining whether the rear door of the vehicle has ever been opened within a predetermined time period before ignition of the vehicle, or after the ignition of the vehicle and before a start of running of the vehicle; and
upon determining that the rear door of the vehicle has ever been opened within the predetermined time period before the ignition of the vehicle, or after the ignition of the vehicle and before the start of running of the vehicle, determining that the target object is present in the rear seats of the vehicle.

3. The vehicle alarm control method according to claim 1, wherein said determining whether the target object is present in the rear seats of the vehicle comprises:
determining whether the target object is present in the rear seats of the vehicle through scanning by a sensor in response to ignition startup of the vehicle.

4. The vehicle alarm control method according to claim 3, wherein the sensor comprises an infrared sensor and/or a camera.

5. The vehicle alarm control method according to claim 1, wherein the first-level alarm occurs inside the vehicle and comprises visual reminder information and/or sound reminder information.

6. The vehicle alarm control method according to claim 5, wherein:
the visual reminder information comprises prompt information displayed on an instrument, central control screen, or head-up display of the vehicle; and
the sound reminder information comprises a buzzer alarm sound or a voice prompt.

7. The vehicle alarm control method according to claim 1, wherein said determining whether the driver of the vehicle has left the driver seat comprises:
determining whether a door at a side of the driver seat of the vehicle is opened;
upon determining that the door at the side of the driver seat of the vehicle is opened, determining whether the doors of the vehicle are locked after the door at the side of the driver seat is opened and closed; and
upon determining that the doors of the vehicle are locked, determining that the driver of the vehicle has left the driver seat.

8. The vehicle alarm control method according to claim 1, wherein said determining whether the driver of the vehicle has left the driver seat comprises:
detecting a gravity change at the driver seat through a gravity sensor disposed inside the driver seat of the vehicle, and determining whether the driver of the vehicle has left the driver seat based on the gravity change.

9. The vehicle alarm control method according to claim 1, wherein the second-level alarm occurs outside the vehicle and comprises a sound reminder and/or a light reminder.

10. The vehicle alarm control method according to claim 1, wherein the target object comprises an article and/or a living subject.

11. The vehicle alarm control method according to claim 1, further comprising, prior to said controlling to issue the first-level alarm:
obtaining an activated or inactivated state of a first-level alarm function of the vehicle, the activated or inactivated state of the first-level alarm function being set as default or set in accordance with an externally inputted user operation; and
performing an operation of said controlling to issue the first-level alarm, in response to the first-level alarm function being in the activated state.

12. The vehicle alarm control method according to claim 1, further comprising, prior to said controlling to issue the second-level alarm:
obtaining an activated or inactivated state of a second-level alarm function of the vehicle, the activated or inactivated state of the second-level alarm function being set as default or set in accordance with an externally inputted user operation; and
performing an operation of said controlling to issue the second-level alarm, in response to the second-level alarm function being in the activated state.

13. A vehicle alarm control system, comprising:
a memory having a control program stored therein; and
a processor,
wherein the control program is configured to, when executed by the processor, implement the vehicle alarm control method according to any one of claims 1 to 12.

14. A vehicle, comprising the vehicle alarm control system according to claim 13.
